# EUROPEAN PATENT APPLICATION

(11) **EP 4 818 095 A1**
(43) Date of publication of application: **07.10.2026**
(21) Application number: 24875718.9
(22) Date of filing: 22.10.2024
(51) Int. Cl.: B65H 75/44

(54) **WINDING AND UNWINDING APPARATUS AND PROCESSING SYSTEM**

(30) Priority: 30.11.2023 CN 202323278679 U
(71) Applicant: Wuxi Lead Intelligent Equipment Co., Ltd., Wuxi, Jiangsu 214028 (CN)
(72) Inventor: LIANG, Hao, Wuxi, Jiangsu 214028 (CN); TU, Xinping, Wuxi, Jiangsu 214028 (CN)
(74) Representative: Rau, Schneck & Hübner Patentanwälte Rechtsanwälte PartGmbB
(86) International application number: PCT/CN2024/126460
(87) International publication number: WO 2025/112991

(57) **Abstract**

The present disclosure discloses a rewinding-unwinding apparatus and a processing system. The rewinding-unwinding apparatus includes a rewinding-unwinding device, a first moving module, and a second moving module. The first moving module is arranged along a first direction together with the rewinding-unwinding device; and the second moving module is arranged on one side of the first moving module; the first moving module is configured for receiving the material core from the rewinding-unwinding device and moving the material core along the first direction to the second moving module, and the second moving module is configured for receiving the material core from the first moving module and moving the material core along a second direction to a transfer position; and/or, the second moving module is configured for moving the material core from the transfer position along the first direction to the first moving module, the first moving module is configured for receiving the material core from the second moving module and moving the material core along the first direction to the rewinding-unwinding device. By adopting the technical solution of the present disclosure, it is possible to reduce the overall volume of the rewinding-unwinding apparatus and be conducive to minimizing the footprint of the apparatus.

## Description

### TECHNICAL FIELD

The present disclosure relates to the technical field of battery cell processing, and particularly to a rewinding-unwinding apparatus and a processing system.

### BACKGROUND

During the processing of batteries, it is necessary to use a rewinding-unwinding apparatus to rewind or unwind pole pieces or diaphragms. In relevant technologies, a transporter is typically used to load and unload a material roll for the rewinding-unwinding apparatus. However, during the loading and unloading process, the transporter needs to enter the interior of the rewinding-unwinding apparatus. As a result, a large safety space must be reserved within the rewinding-unwinding apparatus to provide sufficient room for the movement of the transporter therein. This leads to an increased overall volume of the rewinding-unwinding apparatus, making it difficult to reducing the footprint of the apparatus.

### SUMMARY

The present disclosure discloses a rewinding-unwinding apparatus and a processing system, which may reduce the overall volume of the rewinding-unwinding apparatus and is advantageous in reducing the footprint of the apparatus.

To achieve the above objective, in the first aspect, the present disclosure discloses a rewinding-unwinding apparatus, comprising:
a rewinding-unwinding device provided with a cantilever shaft which is configured for mounting a material core;
a first moving module arranged along a first direction together with the rewinding-unwinding device; and
a second moving module arranged on one side of the first moving module;
the first moving module is configured for receiving the material core from the rewinding-unwinding device and moving the material core along the first direction to the second moving module, and the second moving module is configured for receiving the material core from the first moving module and moving the material core along a second direction to a transfer position;
and/or, the second moving module is configured for moving the material core from the transfer position along the second direction to the first moving module, the first moving module is configured for receiving the material core from the second moving module and moving the material core along the first direction to the rewinding-unwinding device;
wherein the second direction is the same as an axial direction of the cantilever shaft, and the first direction, the second direction, and a height direction of the rewinding-unwinding apparatus are mutually perpendicular to each other, and the transfer position is located outside the rewinding-unwinding device in the second direction.

In an optional implementation, in an embodiment of the first aspect of the present disclosure, the first moving module comprises a first moving device and a first supporting device, the first moving device is arranged along the first direction together with the rewinding-unwinding device, the first supporting device is provided on the first moving device, the first moving device is configured for causing the first supporting device to move along the first direction, and the first supporting device is configured for supporting the material core;
the second moving module comprises a second moving device and a second supporting device, the second moving device is provided on one side of the first moving device, the second supporting device is provided on the second moving device, the second moving device is configured for causing the second supporting device to move along the second direction, and the second supporting device is configured for supporting the material core;
the first supporting device is further configured for moving the material core to the second supporting device;
and/or, the first supporting device is further configured for receiving the material core from the second supporting device.

In an optional implementation, in an embodiment of the first aspect of the present disclosure, the first moving device comprises a first guide rail, a first slider and a first driving mechanism, the first guide rail is arranged along the first direction together with the rewinding-unwinding device, the first guide rail extends along the first direction, the first slider is slidably connected to the first guide rail along the first direction, the first supporting device is provided on the first slider, the first driving mechanism is provided on the first guide rail, and the first driving mechanism is configured for driving the first slider to slide relative to the first guide rail along the first direction;
the second moving device comprises a second guide rail, a second slider and a second driving mechanism, the second guide rail and the first guide rail are arranged spaced apart along the height direction, the second guide rail is arranged along the second direction and extends to the transfer position along the second direction, the second slider is slidably connected to the second guide rail along the first direction and is located on one side of the second guide rail facing towards the first guide rail, the second supporting device is provided on the second slider, and the second driving device is provided on the second guide rail and is configured for driving the second slider to slide relative to the second guide rail along the second direction.

In an optional implementation, in an embodiment of the first aspect of the present disclosure, the material core comprises a winding portion and a sleeving member, the sleeving member is provided on the winding portion, the sleeving member is configured to be sleeved onto the cantilever shaft, the rewinding-unwinding device is further configured for clamping or releasing the sleeving member, and the first supporting device is slidably provided on the first moving device and extends along the height direction;
the first supporting device is movable relative to the first moving device along the height direction, such that the first supporting device abuts against the sleeving member to support the material core;
and/or, such that the sleeving member abuts against the second supporting device, and such that the first supporting device is separated from the sleeving member, so as to place the material core on the second supporting device.

In an optional implementation, in an embodiment of the first aspect of the present disclosure, there are provided two sleeving members, the two sleeving members are respectively provided on both sides of the winding portion along the second direction, the first supporting device comprises two first supporting arms, and the two first supporting arms are respectively slidably provided on both sides of the first moving device along the second direction and are respectively movable relative to the first moving device along the height direction, such that the two first supporting arms respectively abut against the two sleeving members, so as to support the material core;
the second supporting device comprises two second supporting arms which are respectively provided on both sides of the second moving device along the second direction, and the two first supporting arms are further respectively movable relative to the first moving device along the height direction, such that the two sleeving members abuts against the two second supporting arms respectively, and such that the two first supporting arms are respectively separated from the two sleeving members, so as to place the material core on the two second supporting arms for supporting the material core.

In an optional implementation, in an embodiment of the first aspect of the present disclosure, when the first supporting arm and the second supporting arm both abut against the sleeving member, the two first supporting arms are located between the two second supporting arms.

In an optional implementation, in an embodiment of the first aspect of the present disclosure, the first supporting arm is provided with a first recessed portion, and the two first supporting arms are respectively movable relative to the first moving device along the height direction, such that the two first recessed portions respectively abut against the two sleeving members, so as to hold the material core;
the second supporting arm is provided with a second recessed portion, and the two first supporting arms are further respectively movable relative to the first moving device along the height direction, such that the two sleeving members respectively abut against the two second recessed portions, and such that the two first recessed portions are respectively separated from the two sleeving members, so as to place the material core on the two second recessed portions for holding the material core.

In an optional implementation, in an embodiment of the first aspect of the present disclosure, the rewinding-unwinding device is provided with two clamping portions which are arranged spaced apart along the second direction, and each clamping portions is configured for clamping or releasing each sleeving member along the first direction.

In an optional implementation, in an embodiment of the first aspect of the present disclosure, the second moving device and the first moving device are arranged spaced apart along the height direction.

In an optional implementation, in an embodiment of the first aspect of the present disclosure, the rewinding-unwinding device has a work station and a loading-unloading station spaced apart along the first direction, the rewinding-unwinding device is configured for moving the material core from the work station to the loading-unloading station, and for moving the material core from the loading-unloading station to the work station;
the first moving module is configured for receiving the material core from the loading-unloading station, and for moving the material core along the first direction to the second moving module;
and/or, the first moving module is configured for receiving the material core from the second moving module, and for moving the material core along the first direction to the loading-unloading station.

In a second aspect, the embodiments of the present disclosure disclose a processing system, which comprises a transporter and the rewinding-unwinding apparatus according to the first aspect of the above disclosure, and the transporter is provided outside the rewinding-unwinding device in the second direction;
the transporter is configured for receiving the material core from the second moving module at the transfer position;
and/or, the transporter is configured for moving the material core to the transfer position.

Compared with the prior art, the beneficial effects of the present disclosure are as follows:
In the rewinding-unwinding apparatus and the processing system provided by the embodiments of the present disclosure, by providing the first moving module and the second moving module, during the unloading process of the rewinding-unwinding apparatus, the first moving module receives the material core from the rewinding-unwinding device and moves the material core along the first direction to the second moving module. The second moving module receives the material core from the first moving module and can move the material core along the second direction to the transfer position. During the loading process of the rewinding-unwinding apparatus, the second moving module can move the material core from the transfer position along the second direction to the first moving module, and the first moving module receives the material core from the second moving module, and moves the material core along the first direction to the rewinding-unwinding device, such that when the rewinding-unwinding apparatus perform loading and unloading, the transporter may perform loading and unloading of the material core at the transfer station, that is, the transporter may perform loading and unloading of the material core at a position outside the unwinding device in the second direction. Since the transporter does not need to enter the interior of the rewinding-unwinding apparatus, which may reduce the overall volume of the rewinding-unwinding apparatus and is conducive to minimizing the footprint of the apparatus.

### BRIEF DESCRIPTION OF THE DRAWINGS

In order to more clearly illustrate technical solutions in the embodiments of the present disclosure, accompanying drawings that need to be used in the embodiments will be briefly introduced as follows. Obviously, drawings in following description are only some embodiments of the present disclosure. For those skilled in the art, other drawings can also be obtained according to those drawings without creative efforts.
FIG. 1 is a three-dimensional schematic structural diagram of a rewinding-unwinding apparatus disclosed in the first aspect of the embodiments of the present disclosure.
FIG. 2 is a schematic structural diagram of the rewinding-unwinding apparatus disclosed in the first aspect of the embodiments of the present disclosure.
FIG. 3 is a three-dimensional schematic structural diagram of a first moving module and a material core disclosed in the first aspect of the embodiments of the present disclosure.
FIG. 4 is a three-dimensional schematic structural diagram of a second moving module disclosed in the first aspect of the embodiments of the present disclosure.
FIG. 5 is a three-dimensional schematic structural diagram of a processing system disclosed in the second aspect of the embodiments of the present disclosure.

### Description of reference signs:

1, rewinding-unwinding apparatus; 10, rewinding-unwinding device; 100, work station; 101, loading-unloading station; 11, first moving module; 110, first moving device; 110a, first guide rail; 110b, first slider; 111, first supporting device; 111a, first supporting arm; 111b, first recessed portion; 12, second moving module; 120, second moving device; 120a, second guide rail; 120b, second slider; 120c, second driving device; 121, second supporting device; 121a, second supporting arm; 121b, second recessed portion; 2, processing system; 20, transporter; 200, transport mechanism; 201, third supporting device; 3, material core; 30, winding portion; 31, sleeving member; X, first direction; Y, second direction; Z, height direction.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by a person of ordinary skill in the art without making creative labor fall within the scope of protection of the present disclosure.

The technical solution of the present disclosure will be further described below with reference to the embodiments and the drawings.

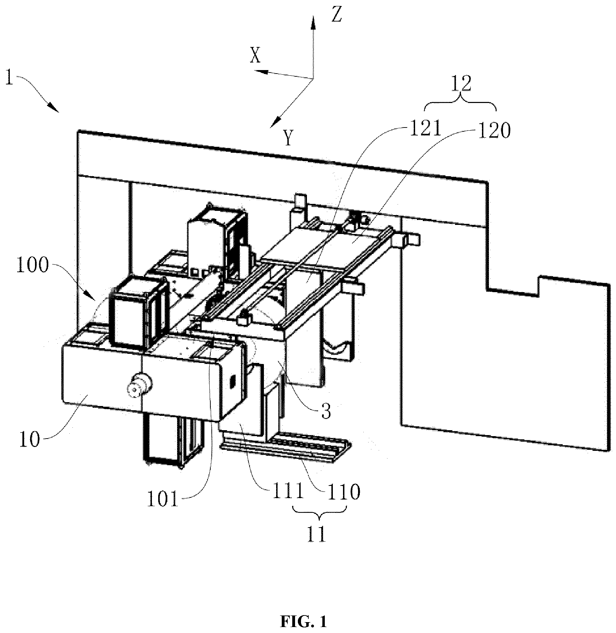

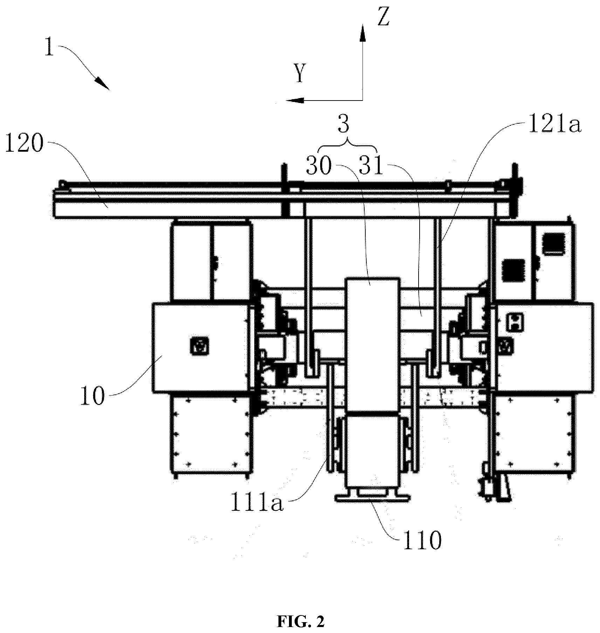

Please refer to FIG. 1 and FIG. 2 together, the first aspect of embodiments of the present disclosure provides a rewinding-unwinding apparatus 1, which includes a rewinding-unwinding device 10, a first moving module 11, and a second moving module 12. The rewinding-unwinding device 10 is provided with a cantilever shaft (not shown) which is configured for mounting a material core 3; the first moving module 11 is arranged along a first direction X together with the rewinding-unwinding device 10; and the second moving module 12 is arranged on one side of the first moving module 11; the first moving module 11 is configured for receiving the material core 3 from the rewinding-unwinding device 10 and moving the material core 3 along the first direction X to the second moving module 12, and the second moving module 12 is configured for receiving the material core 3 from the first moving module 11 and moving the material core 3 along a second direction Y to a transfer position; and/or, the second moving module 12 is configured for moving the material core 3 from the transfer position along the first direction X to the first moving module 11, the first moving module 11 is configured for receiving the material core 3 from the second moving module 12 and moving the material core 3 along the first direction X to the rewinding-unwinding device 10; wherein the second direction Y is the same as an axial direction of the cantilever shaft, and the first direction X, the second direction Y, and a height direction of the rewinding-unwinding apparatus 1 are mutually perpendicular to each other, and the transfer position is located outside the rewinding-unwinding device 10 in the second direction Y.

In the rewinding-unwinding apparatus 1 provided by the first aspect of embodiments of the present disclosure, the rewinding-unwinding device 10 is configured for rewinding the material onto the material core 3 or unwinding the material from the material core 3. By providing the first moving module 11 and the second moving module 12, during the unloading process of the rewinding-unwinding apparatus 1, the first moving module 11 receives the material core 3 from the rewinding-unwinding device 10 and moves the material core 3 along the first direction X to the second moving module 12. The second moving module 12 receives the material core 3 from the first moving module 11 and can move the material core 3 along the second direction Y to the transfer position. During the loading process of the rewinding-unwinding apparatus 1, the second moving module 12 can move the material core 3 from the transfer position along the second direction Y to the first moving module 11, and the first moving module 11 receives the material core 3 from the second moving module 12, and moves the material core 3 along the first direction X to the rewinding-unwinding device 10.

Here, the transfer position refers to a position where the transporter performs the transfer operation with the second moving module 12 for the material core 3. Specifically, it is the position where the transporter loads the material core 3 to the second moving module 12 and unloads the material core 3 from the second moving module 12. The transfer position is located outside the rewinding-unwinding device 10 in the second direction Y, and at the same time, the transfer position is also located outside the rewinding-unwinding device 10 in the first direction X. It should be noted that, in actual scenarios, since the transfer position has a certain volume (i.e., the transporter occupies a certain space), the transfer position being located outside the rewinding-unwinding device 10 in the second direction Y and the first direction X may mean that a part of the transfer position is located outside the rewinding-unwinding device 10 in the second direction Y and the first direction X, or it may mean that the entire transfer position is located outside the rewinding-unwinding device 10 in the second direction Y and the first direction X. In other words, any nearby position near the edge of the rewinding-unwinding device 10 in the first direction X and the second direction Y can be understood as outside the rewinding-unwinding device 10. In this way, when the rewinding-unwinding apparatus 1 performs loading and unloading, the transporter may load and unload the material core 3 outside the rewinding-unwinding device 10 without entering inside the rewinding-unwinding apparatus 1. This eliminates the need to reserve a safety space for the movement of the transporter in the rewinding-unwinding apparatus 1, thereby reducing the overall volume of the rewinding-unwinding apparatus 1 and being conducive to minimizing the footprint of the apparatus.

Optionally, the rewinding-unwinding device 10 of the present disclosure can be applied to the rewinding and unwinding of materials in lithium battery processing techniques such as trimming and rolling, and the material in the present disclosure may be a pole piece, diaphragm, etc., which can be specifically selected according to the actual situation, and is not specifically limited in the present embodiment.

Optionally, the rewinding-unwinding device 10 may be a turret-type rewinding-unwinding device or a fixed-axis rewinding-unwinding device, which is not specifically limited in the present embodiment.

In some embodiments, the first moving module 11 includes a first moving device 110 and a first supporting device 111. The first moving device 110 and the rewinding-unwinding device 10 are provided along the first direction X, and the first supporting device 111 is provided on the first moving device 110. The first moving device 110 is used to drive the first supporting device 111 to move along the first direction X, and the first supporting device 111 is used to support the material core 3. The second moving module 12 includes a second moving device 120 and a second supporting device 121, the second moving device 120 is provided on one side of the first moving device 110, the second supporting device 121 is provided on the second moving device 120, the second moving device 120 is configured for causing the second supporting device 121 to move along the second direction Y, and the second supporting device 121 is configured for supporting the material core 3; the first supporting device 111 is further configured for moving the material core 3 to the second supporting device 121; and/or, the first supporting device 111 is further configured for receiving the material core 3 from the second supporting device 121.

In this way, the first moving device 110 may drive the first supporting device 111 to move in the first direction X, and the first supporting device 111 may support the material core 3, thereby receiving the material core 3 from the rewinding-unwinding device 10 and also from the second supporting device 121. The second moving device 120 may cause the second supporting device 121 to move in the second direction Y, and the second supporting device 121 may also support the material core 3 and receive the material core 3 from the first supporting device 111, thus realizing the movement process of loading and unloading the material core 3.

In some embodiments, the second moving device 120 and the first moving device 110 are arranged spaced apart along the height direction Z.

In this way, since the rewinding-unwinding device 10 has a certain height in the height direction Z, arranging the second moving device 120 and the first moving device 110 spaced apart in the height direction Z allows full utilization of the space of the rewinding-unwinding apparatus 1 in the height direction Z, thereby reducing the space occupied by the second moving device 120 and the first moving device 110 within the rewinding-unwinding apparatus 1. In the present embodiment, the second moving device 120 is located above the first moving device 110 in the height direction Z.

In some embodiments, the material core 3 includes a winding portion 30 and a sleeving member 31, the sleeving member 31 is provided on the winding portion 30 and is configured to be sleeved onto the cantilever shaft. The rewinding-unwinding device 10 is further configured for clamping or releasing the sleeving member 31. The first supporting device 111 is slidably provided on the first moving device 110 and extends along the height direction Z. The first supporting device 111 is movable relative to the first moving device 110 along the height direction Z, such that the first supporting device 111 abuts against the sleeving member 31 to support the material core 3; and/or, such that the sleeving member 31 abuts against the second supporting device 121, and such that the first supporting device 111 is separated from the sleeving member 31, so as to place the material core 3 on the second supporting device 121.

In this way, by making the first supporting device 111 slidably provided on the first moving device 110, in the unloading process of the rewinding-unwinding apparatus 1, the first supporting device 111 may move upward relative to the first moving device 110 along the height direction Z until it abuts against the sleeving member 31 of the material core 3 on the rewinding-unwinding device 10. At this point, the rewinding-unwinding device 10 releases the sleeving member 31, allowing the material core 3 to be supported by the first supporting device 111. The first moving device 110 then moves the first supporting device 111 along the first direction X, bringing the first supporting device 111 and the second supporting device 121 into a handover position. The first supporting device 111 moves downward along the height direction Z relative to the first moving device 110 until the sleeving member 31 of the material core 3 moves to abut against the second supporting device 121. The first supporting device 111 further moves to be separated from the sleeving member 31, so as to place the material core 3 on the second supporting device 121. The second moving device 120 then moves the second supporting device 121 along the second direction Y to the transfer position, completing the unloading process of the material core 3; in the loading process of the rewinding-unwinding apparatus 1, the second supporting device 121 receives the material core 3 from the transfer position and supports it, and the second moving device 120 moves the second supporting device 121 along the second direction Y, such that the second supporting device 121 and the first supporting device 111 are in the handover position, and the first supporting device 111 moves upward in the height direction Z relative to the first moving device 110, until the first supporting device 111 abuts against the sleeving member 31 of the material core3, and such that the sleeving member 31 of the material core 3 is separated from the second supporting device 121. The first moving device 110 then moves the first supporting device 111 along the first direction X, so as to move the material core 3 to the rewinding-unwinding device 10. At this point, the rewinding-unwinding device 10 grips the sleeving member 31, such that the material core 3 is held on the rewinding-unwinding device 10. The first supporting device 111 then moves downward relative to the first moving device 110 along the height direction Z, so as to separate the material core 3 from the sleeving member 31, completing the loading process of the material core 3. In the loading and unloading processes of the rewinding-unwinding apparatus 1, when the first supporting device 111 and the second supporting device 121 are in the handover position, the transfer of the material core 3 between the first supporting device 111 and the second supporting device 121 can be achieved solely through the up-and-down movement of the first supporting device 111 along the height direction Z, without the need for the second supporting device 121 to move along the height direction Z, which not only simplifies the structure of the rewinding-unwinding apparatus 1 but also improves the loading and unloading efficiency of the rewinding-unwinding apparatus 1, thereby enhancing the production efficiency of the rewinding-unwinding apparatus 1.

In some embodiments, there are provided two sleeving members 31, the two sleeving members 31 are respectively provided on both sides of the winding portion 30 along the second direction Y. The first supporting device 111 includes two first supporting arms 111a, which are respectively slidably provided on both sides of the first moving device 110 along the second direction Y and are respectively movable relative to the first moving device 110 along the height direction Z, such that the two first supporting arms 111a respectively abut against the two sleeving members 31 to support the material core 3. The second supporting device 121 includes two second supporting arms 121a which are respectively provided on both sides of the second moving device 120 along the second direction Y, and the two first supporting arms 111a are further respectively movable relative to the first moving device 110 along the height direction Z, such that the two sleeving members 31 abuts against the two second supporting arms 121a respectively, and such that the two first supporting arms 111a are respectively separated from the two sleeving members 31, so as to place the material core 3 on the two second supporting arms 121a for supporting the material core 3.

In this way, in the loading and unloading processes of the rewinding-unwinding device 10, the two first supporting arms 111a can respectively support the two sleeving members 31 of the material core 3, and the two second supporting arms 121a can also respectively support the two sleeving members 31 of the material core 3, ensuring the stability of holding the material core 3 and avoiding the material core 3 from falling off during the movement to affect the normal operation of the rewinding-unwinding apparatus 1.

Optionally, the two sleeving members 31 can be two separate components, or they can be integrally formed (for example, as shown in FIG. 2, the two sleeving members 31 are integrally formed as a single sleeve passing through both sides of the winding portion 30 along the second direction Y). The specific configuration may be selected based on actual requirements and is not specifically limited in the present embodiment.

Optionally, the cantilever shaft can be a long shaft, and when the material core 3 is mounted on the cantilever shaft, the two sleeving members 31 are both sleeved over the same long shaft. Alternatively, the cantilever shaft can be two short shafts arranged spaced apart along the second direction Y, and when the material core 3 is mounted on the cantilever shaft, the two sleeving members 31 are respectively sleeved over the two short shafts. The specific configuration may be selected based on actual requirements and is not specifically limited in the present embodiment.

In some embodiments, at least one of the two second supporting arms 121a may slide relative to the second moving device 110 along the second direction Y. In this way, by enabling the second supporting arm 121a to slide relative to the second moving device 110 along the second direction Y, it is possible to adjust the distance between the two second supporting arms 121a along the second direction Y, enabling them to accommodate material cores 3 of different sizes (i.e., different widths) in the second direction Y.

In some embodiments, the two second supporting arms 121a can slide relative to the second moving device 110 along the height direction Z, and the position of the second moving device 110 in the height direction Z is also adjustable. In this way, by sliding the second supporting arm 121a relative to the second moving device 110 along the height direction Z, as well as adjusting the position of the second moving device 110 in the height direction Z, the distance between the position where the second supporting arm 121a abuts against the material core 3 and the second moving device 110 in the height direction can be changed, enabling them to accommodate material cores 3 of different sizes (i.e., different diameters) in the height direction Z.

In some embodiments, the rewinding-unwinding device 10 is provided with two clamping portions (not shown) arranged spaced apart along the second direction Y, and each clamping portion is configured for clamping or releasing each sleeving member 31 along the first direction X.

In this way, by providing two clamping portions spaced apart along the second direction Y, the two clamping portions can respectively clamp the two sleeving members 31, ensuring the stability of clamping the material core 3 when the rewinding-unwinding apparatus 1 rewinds the material onto the winding portion 30. Moreover, since the clamping portions clamp the sleeving member 31 along the first direction X, this does not interfere with the rotation of the sleeving member 31 along the straight line in the second direction Y.

Optionally, the clamping portions can be pneumatic chucks, mechanical grippers, etc., which is not specifically limited in the present embodiment. When the clamping portion is a pneumatic chuck, it is provided on the cantilever shaft.

Please refer to FIG. 2, in some embodiments, when both the first supporting arm 111a and the second supporting arm 121a abut against the sleeving member, the two first supporting arms 111a are located between the two second supporting arms 121a.

In this way, in the loading and unloading processes of the rewinding-unwinding apparatus 1, when the material core 3 is transferred between the first moving module 11 and the second moving module 12, the two first supporting arms 111a are located between the two second supporting arms 121a. Specifically, the first supporting arm 111a abuts against the end of the sleeving member 31 close to the winding portion 30, while the second supporting arm 121a abuts against the end of the sleeving member 31 away from the winding portion 30. This ensures that the positions where the first supporting arm 111a and the second supporting arm 121a abut against the sleeving member 31 are staggered, thereby avoiding collisions between the first supporting arm 111a and the second supporting arm 121a and ensuring the normal operation of the rewinding-unwinding apparatus 1.

Preferably, the distance between the two first supporting arms 111a in the second direction Y is less than the distance between the two second supporting arms 121a in the second direction Y. As a result, neither the first supporting arm 111a relative to the first moving device 110 nor the second supporting arm 121a relative to the second moving device 111 requires to additional movement in the second direction Y to position the two first supporting arms 111a between the two second supporting arms 121a. This further improves the production efficiency of the rewinding-unwinding apparatus 1.

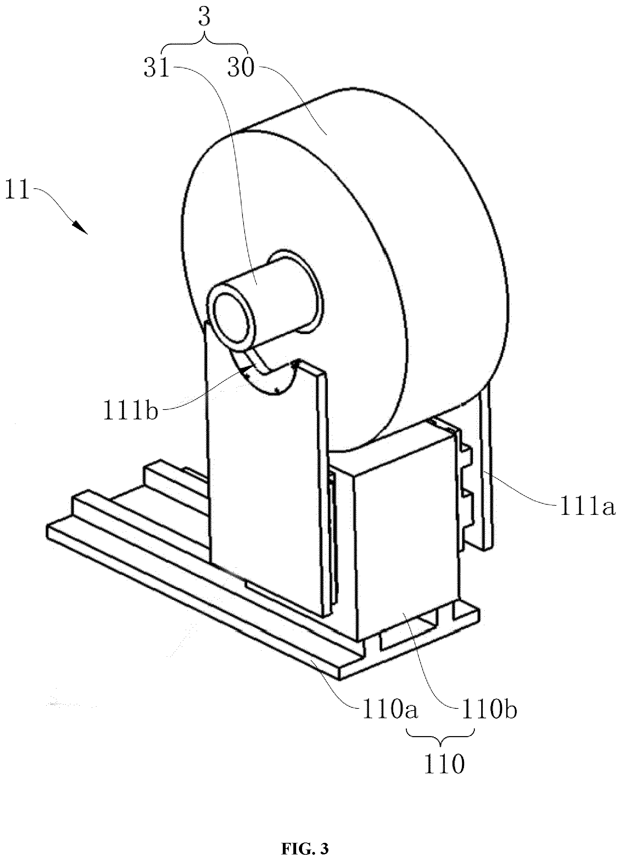

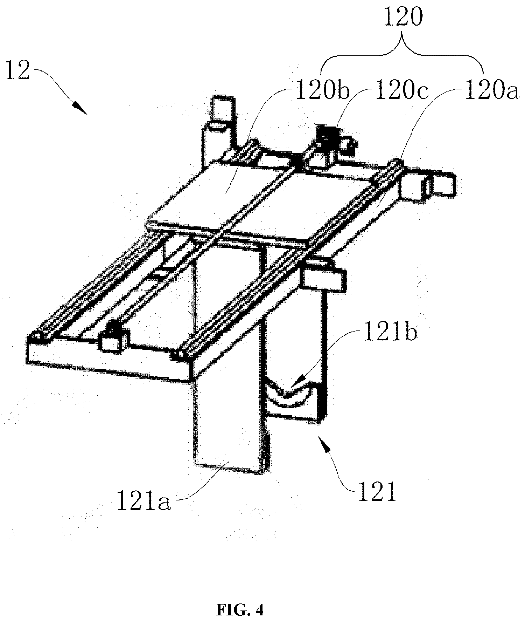

Please refer to FIG. 3 and FIG. 4, in some embodiments, the first supporting arm 111a is provided with a first recessed portion 111b. The two first supporting arms 111a are respectively movable relative to the first moving device 110 along the height direction Z, such that the two first recessed portions 111b respectively abut against the two sleeving members 31, thereby holding the material core 3. The second supporting arm 121a is provided with a second recessed portion 121b, and the two first supporting arms 111a are further respectively movable relative to the first moving device 110 along the height direction Z, such that the two sleeving members 31 respectively abut against the two second recessed portions 121b, and such that the two first recessed portions 111b are respectively separated from the two sleeving members 31, thereby placing the material core 3 on the two second recessed portions 121b for holding the material core 3. In the present embodiment, when both the first recessed portion 111b and the second recessed portion 121b abut against the sleeving member, the two first recessed portions 111b are located between the two second recessed portions 121b.

In this way, by providing the first recessed portion 111b and the second recessed portion 121b, the first recessed portion 111b and the second recessed portion 121b can directly engage with the sleeving member 31, thereby supporting and holding the sleeving member 31. In the loading and unloading processes of the rewinding-unwinding apparatus 1, when the material core 3 is transferred between the first moving module 11 and the second moving module 12, the two first recessed portions 111b are located between the two second recessed portions 121b. Specifically, the first recessed portion 111b on the first supporting arm 111a abuts against the end of the sleeving member 31 close to the winding portion 30, while the second recessed portion 121b on the second supporting arm 121a abuts against the end of the sleeving member 31 away from the winding portion 30. This ensures that when the material core 3 is transferred between the first moving module 11 and the second moving module 12, the positions where the first recessed portion 111b and the second recessed portion 121b abut against the sleeving member 31 are staggered, thereby avoiding collisions between the first recessed portion 111b and the second recessed portion 121b and ensuring the normal operation of the rewinding-unwinding apparatus 1.

Optionally, the first recessed portion 111b and the second recessed portion 121b can be V-shaped grooves, U-shaped grooves, arc-shaped grooves, etc., which can not only support the sleeving member 31 in the height direction Z but also fix the sleeving member 31 in the second direction Y, thereby holding the material core 3 during transportation while facilitating the transfer of the material core 3 between the first moving module 11 and the second moving module 12. The specific configuration can be selected according to the actual situation and is not specifically limited in the present embodiment.

In other embodiments, grippers, magnetic clamps, etc., may also be provided on the first supporting arm 111a and the second supporting arm 121a to hold the material core 3, which can be specifically selected according to the actual situation and is not specifically limited in the present embodiment.

In some embodiments, the first moving device 110 includes a first guide rail 110a, a first slider 110b and a first driving mechanism (not shown). The first guide rail 110a is provided on one side of the rewinding-unwinding device 10 along the first direction X, and extends along the first direction X. The first slider 110b is slidably connected to the first guide rail 110a along the first direction X, and the first supporting device 111 is provided on the first slider 110b. The first driving mechanism is provided on the first guide rail 110a, and is configured for driving the first slider 110b to slide relative to the first guide rail 110a along the first direction. The second moving device 120 includes a second guide rail 120a, a second slider 120b and a second driving mechanism 120c. The second guide rail 120a and the first guide rail 110a are arranged spaced apart along the height direction Z, the second guide rail 120a is arranged along the second direction Y and extends to the transfer position along the second direction Y. The second slider 120b is slidably connected to the second guide rail 120a along the first direction X and is located on one side of the second guide rail 120a facing towards the first guide rail 110a. The second supporting device 121 is provided on the second slider 120b, and the second driving device is provided on the second guide rail 120a and is configured for driving the second slider 120b to slide relative to the second guide rail 120a along the second direction Y.

In this way, by providing the first guide rail 110a, the first slider 110b and the first driving mechanism, the first guide rail 110a extends along the first direction X. This allows the first slider 110b to move along the first guide rail 110a in the first direction X, thereby causing the first supporting device 111 to move in the first direction X. The first driving mechanism provides the driving force for the sliding of the first slider 110b on the first guide rail 110a. By providing the second guide rail 120a, the second slider 120b and the second driving mechanism 120c, the second guide rail 120a extends along the second direction Y. This allows the second slider 120b to move along the second guide rail 120a in the second direction Y, thereby causing the second supporting device 121 to move along the second direction Y. The second driving mechanism 120c provides the driving force for the sliding of the second slider 120b on the second guide rail 120a. Additionally, the second guide rail 120a extends to the transfer position along the second direction Y, such that the second slider 120b may move along the second direction Y to the transfer position. Thus, the second supporting device 121 can move the material core 3 to the transfer position, facilitating the transporter to perform the loading and unloading outside the rewinding-unwinding device 10.

Optionally, the first driving mechanism and the second driving mechanism 120c can be electric push-rods, ball screw mechanisms, linear actuators, etc., which can be specifically selected according to actual situations and is not specifically limited in the present embodiment.

Please refer again to FIG. 1, in some embodiments, the rewinding-unwinding device 10 has a work station 100 and a loading-unloading station 101 spaced apart along the first direction X. The rewinding-unwinding device 10 is configured for rewinding the material onto the material core 3 at the work station 100, for moving the material core 3 from the work station 100 to the loading-unloading station 101, and for moving the material core 3 from the loading-unloading station 101 to the work station 100; the first moving module 11 is configured for receiving the material core 3 from the loading-unloading station 101, and for moving the material core 3 along the first direction X to the second moving module 12; and/or, the first moving module 11 is configured for receiving the material core 3 from the second moving module 12, and for moving the material core 3 along the first direction X to the loading-unloading station 101.

In this way, the rewinding-unwinding device 10 has the work station 100 and the loading-unloading station 101. After the rewinding apparatus rewinds the material onto the material core 3 or feeds the material from the material core 3 at the work station 100, the material core 3 may move from the work station 100 to the loading-unloading station 101. The first moving module 11 may then receive the material core 3 processed by the loading-unloading station 101 and move the unprocessed material core 3 to the loading-unloading station 101. After the rewinding apparatus moves the material core 3 from the loading-unloading station 101 to the work station 100, it again rewinds the material onto the material core 3 or feeds the material from the material core 3, such that in the production process of the rewinding-unwinding apparatus 1, the steps of rewinding the material onto the material core 3 or feeding the material from the material core 3 and the loading and unloading steps are located at different positions of the rewinding apparatus. This allows the steps of rewinding materials onto the material core 3 or feeding the materials from the material core 3 on the rewinding-unwinding device 10 to occur simultaneously with the loading and unloading steps without interfering with each other, further enhancing the production efficiency of the rewinding-unwinding apparatus 1.

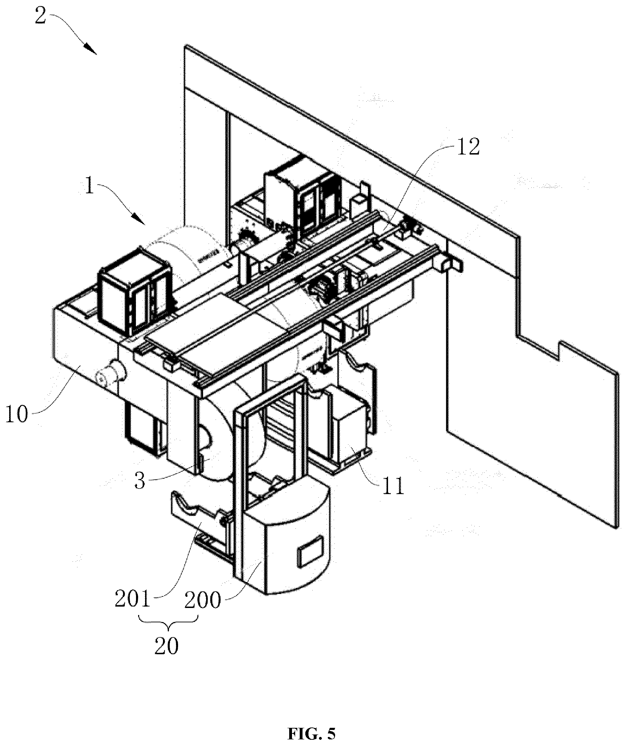

Please refer to FIG. 5, the second aspect of the present disclosure provides a processing system 2, which includes a transporter 20 and the rewinding-unwinding apparatus 1 according to the first aspect of embodiments of the present disclosure. The transporter 20 is provided outside the rewinding-unwinding device 10 in the second direction Y; the transporter 20 is configured for receiving the material core 3 from the second moving module 12 at the transfer position; and/or, the transporter 20 is configured for moving the material core 3 to the transfer position.

In the processing system 2 provided by the second aspect of the present disclosure, as the processing system 2 adopts the rewinding-unwinding apparatus 1 from the first aspect of embodiments of the present disclosure, in the unloading process of the rewinding-unwinding apparatus 1, the first moving module 11 receives the material core 3 from the rewinding-unwinding device 10 and moves the material core 3 along the first direction X to the second moving module 12. The second moving module 12 receives the material core 3 from the first moving module 11 and can move the material core 3 along the second direction Y to the transfer position. In the loading process of the rewinding-unwinding apparatus 1, the second moving module 12 can move the material core 3 from the transfer position along the second direction Y to the first moving module 11, and the first moving module 11 receives the material core 3 from the second moving module 12, and moves the material core 3 along the first direction X to the rewinding-unwinding device 10. Thus, when the rewinding-unwinding apparatus 1 performs loading and unloading, the transporter 20 can perform the loading and unloading of the material core 3 outside the rewinding-unwinding device 10 without the need for the transporter 20 to enter the interior of the rewinding-unwinding apparatus 1. This eliminates the need to reserve a safety space for movement of the transporter in the rewinding-unwinding apparatus 1, thereby reducing the overall volume of the rewinding-unwinding apparatus 1 and being conducive to minimizing the footprint of the processing system 2.

In some embodiments, the transporter 20 includes a transport mechanism 200 and a third supporting device 201, with the third supporting device 201 being slidably provided on the transport mechanism 200. The specific structure and working principle of the third supporting device 201 can refer to the specific structure and working principle of the first supporting device 111, and will not be elaborated herein.

The rewinding-unwinding apparatus and processing system disclosed in the embodiments of the present disclosure have been described in detail above, and specific examples have been applied herein to illustrate the principles and implementations of the present disclosure. The above examples are only used to help understand the rewinding-unwinding apparatus and the processing system of the present disclosure and its core ideas; at the same time, for the person of ordinary skill in the art, based on the ideas of the present disclosure, there will be changes in the specific implementation and application scope. In summary, the contents of this specification should not be construed as a limitation of the present disclosure.

## Claims

1. A rewinding-unwinding apparatus, **characterized by** comprising:
a rewinding-unwinding device provided with a cantilever shaft which is configured for mounting a material core;
a first moving module arranged along a first direction together with the rewinding-unwinding device; and
a second moving module arranged on one side of the first moving module;
the first moving module is configured for receiving the material core from the rewinding-unwinding device and moving the material core along the first direction to the second moving module, and the second moving module is configured for receiving the material core from the first moving module and moving the material core along a second direction to a transfer position;
and/or, the second moving module is configured for moving the material core from the transfer position along the second direction to the first moving module, the first moving module is configured for receiving the material core from the second moving module and moving the material core along the first direction to the rewinding-unwinding device;
wherein the second direction is the same as an axial direction of the cantilever shaft, and the first direction, the second direction, and a height direction of the rewinding-unwinding apparatus are mutually perpendicular to each other, and the transfer position is located outside the rewinding-unwinding device in the second direction.

2. The rewinding-unwinding apparatus according to claim 1, **characterized in that** the first moving module comprises a first moving device and a first supporting device, the first moving device is arranged along the first direction together with the rewinding-unwinding device, the first supporting device is provided on the first moving device, the first moving device is configured for causing the first supporting device to move along the first direction, and the first supporting device is configured for supporting the material core ;
the second moving module comprises a second moving device and a second supporting device, the second moving device is provided on one side of the first moving device, the second supporting device is provided on the second moving device, the second moving device is configured for causing the second supporting device to move along the second direction, and the second supporting device is configured for supporting the material core ;
the first supporting device is further configured for moving the material core to the second supporting device;
and/or, the first supporting device is further configured for receiving the material core from the second supporting device.

3. The rewinding-unwinding apparatus according to claim 2, **characterized in that** the first moving device comprises a first guide rail, a first slider and a first driving mechanism, the first guide rail is arranged along the first direction together with the rewinding-unwinding device, the first guide rail extends along the first direction, the first slider is slidably connected to the first guide rail along the first direction, the first supporting device is provided on the first slider, the first driving mechanism is provided on the first guide rail, and the first driving mechanism is configured for driving the first slider to slide relative to the first guide rail along the first direction;
the second moving device comprises a second guide rail, a second slider and a second driving mechanism, the second guide rail and the first guide rail are arranged spaced apart along the height direction, the second guide rail is arranged along the second direction and extends to the transfer position along the second direction, the second slider is slidably connected to the second guide rail along the first direction and is located on one side of the second guide rail facing towards the first guide rail, the second supporting device is provided on the second slider, and the second driving device is provided on the second guide rail and is configured for driving the second slider to slide relative to the second guide rail along the second direction.

4. The rewinding-unwinding apparatus according to claim 3, **characterized in that** the material core comprises a winding portion and a sleeving member, the sleeving member is provided on the winding portion, the sleeving member is configured to be sleeved onto the cantilever shaft, the rewinding-unwinding device is further configured for clamping or releasing the sleeving member, and the first supporting device is slidably provided on the first moving device and extends along the height direction;
the first supporting device is movable relative to the first moving device along the height direction, such that the first supporting device abuts against the sleeving member to support the material core;
and/or, such that the sleeving member abuts against the second supporting device, and such that the first supporting device is separated from the sleeving member, so as to place the material core on the second supporting device.

5. The rewinding-unwinding apparatus according to claim 4, **characterized in that** there are provided two sleeving members, the two sleeving members are respectively provided on both sides of the winding portion along the second direction, the first supporting device comprises two first supporting arms, and the two first supporting arms are respectively slidably provided on both sides of the first moving device along the second direction and are respectively movable relative to the first moving device along the height direction, such that the two first supporting arms respectively abut against the two sleeving members, so as to support the material core;
the second supporting device comprises two second supporting arms which are respectively provided on both sides of the second moving device along the second direction, and the two first supporting arms are further respectively movable relative to the first moving device along the height direction, such that the two sleeving members abuts against the two second supporting arms respectively, and such that the two first supporting arms are respectively separated from the two sleeving members, so as to place the material core on the two second supporting arms for supporting the material core.

6. The rewinding-unwinding apparatus according to claim 5, **characterized in that** when the first supporting arm and the second supporting arm both abut against the sleeving member, the two first supporting arms are located between the two second supporting arms.

7. The rewinding-unwinding apparatus according to claim 5, **characterized in that** the first supporting arm is provided with a first recessed portion, and the two first supporting arms are respectively movable relative to the first moving device along the height direction, such that the two first recessed portions respectively abut against the two sleeving members, so as to hold the material core ;
the second supporting arm is provided with a second recessed portion, and the two first supporting arms are further respectively movable relative to the first moving device along the height direction, such that the two sleeving members respectively abut against the two second recessed portions, and such that the two first recessed portions are respectively separated from the two sleeving members, so as to place the material core on the two second recessed portions for holding the material core.

8. The rewinding-unwinding apparatus according to claim 5, **characterized in that** the rewinding-unwinding device is provided with two clamping portions which are arranged spaced apart along the second direction, and each clamping portions is configured for clamping or releasing each sleeving member along the first direction.

9. The rewinding-unwinding apparatus according to any one of claims 2 to 8, **characterized in that** the second moving device and the first moving device are arranged spaced apart along the height direction.

10. The rewinding-unwinding apparatus according to any one of claims 1 to 8, **characterized in that** the rewinding-unwinding device has a work station and a loading-unloading station spaced apart along the first direction, the rewinding-unwinding device is configured for moving the material core from the work station to the loading-unloading station, and for moving the material core from the loading-unloading station to the work station;
the first moving module is configured for receiving the material core from the loading-unloading station, and for moving the material core along the first direction to the second moving module;
and/or, the first moving module is configured for receiving the material core from the second moving module, and for moving the material core along the first direction to the loading-unloading station.

11. A processing system, **characterized by** comprising a transporter and the rewinding-unwinding apparatus according to any one of claims 1 to 10, the transporter being provided outside the rewinding-unwinding device in the second direction;
the transporter is configured for receiving the material core from the second moving module at the transfer position;
and/or, the transporter is configured for moving the material core to the transfer position.
